(19) Europäisches Patentamt

European Patent Office

Office européen des brevets

(11) **EP 4 668 731 A1**

(12) **EUROPEAN PATENT APPLICATION**

(43) Date of publication:
**24.12.2025 Bulletin 2025/52**

(21) Application number: **25175962.7**

(22) Date of filing: **13.05.2025**

(51) International Patent Classification (IPC):
**H04N 13/156** (2018.01)      *G06T 19/00* (2011.01)
**H04N 13/00** (2018.01)

(52) Cooperative Patent Classification (CPC):
**H04N 13/156;** H04N 13/128; H04N 13/344;
H04N 2013/0081

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.06.2024 US 202463663181 P
08.04.2025 US 202519173627**

(71) Applicant: **Apple Inc.
Cupertino, CA 95014 (US)**

(72) Inventors:
• **NEJATI, Negar**
  **Cupertino, 95014 (US)**
• **NOORKAMI, Maneli**
  **Cupertino, 95014 (US)**
• **McCOMBE, James A.**
  **Cupertino, 95014 (US)**
• **TAGHAVI NASRABADI, Afshin**
  **Cupertino, 95014 (US)**

(74) Representative: **Zacco Denmark A/S
Arne Jacobsens Allé 15
2300 Copenhagen S (DK)**

(54) **DEPTH ADJUSTMENT OF 3D OVERLAY OBJECT ACCORDING TO THE TILT OF AUGMENTED REALITY HEAD-MOUNTED DISPLAY DEVICE**

(57)     The presentation of overlay content for a 3D scene is adjusted based on head tilt. Image content for a 3D scene is obtained by a head-mounted device. A target depth for the overlay content is determined based on depth information for the content of the scene corresponding to a first disparity. In response to a tilt of the head-mounted device satisfying a correction criterion, an adjusted target depth value for the overlay image data is determined, and the disparity of the overlay image data is reduced in accordance with the adjusted target depth value. Alternatively, an adjusted vertical disparity and an adjusted horizontal disparity are determined based on the first disparity and the orientation of the head-mounted device, and applied to the overlay image data.

*FIG. 2*

EP 4 668 731 A1

## Description

### Background

In augmented reality (AR), virtual reality (VR) and other immersive technologies, three-dimensional (3D) content is often provided for viewing on a playback device. Overlay content can also be presented by the playback device. However, the overlay content may not be associated with information as to what depth the overlay content should be presented. Selecting an incorrect depth may affect a viewing experience by causing an interference between the video content and the overlay content.

### Brief Description of the Drawings

FIGs. 1A-1B show diagrams of a technique for reducing disparity for overlay content, according to one or more embodiments.
FIG. 2 shows a flowchart of a technique for reducing disparity for overlay content, in accordance with one or more embodiments.
FIGS. 3A-3B show diagrams of an example technique for adjusting vertical and horizontal disparity in accordance with head tilt, according to one or more embodiments.
FIG. 4 shows a flowchart of a technique for adjusting vertical and horizontal disparity in accordance with head tilt, according to one or more embodiments.
FIG. 5 shows, in block diagram form, an example network diagram, according to one or more embodiments.
FIG. 6 shows, in block diagram form, a mobile device in accordance with one or more embodiments.

### Detailed Description

Embodiments described herein relate to a technique for providing placement information for overlay content onto 3D image data. In particular, embodiments described herein described technique for adjusting presentation of overlay data on 3D content in association with an orientation of a head mounted device displaying the content.

When three-dimensional content is presented, stereo frames are typically displayed having a certain amount of disparity in order to provide the effect of depth in the scene. Accordingly, the disparity between the stereo frames is typically in a horizontal direction, aligned with a user's eyes. However, when overlay content is layered or presented over the 3D content, such as with captions or other ancillary data or interface components, the overlay content is presented with a different disparity such that the overlay content appears closer to the user than the scene data. In some embodiments, the overlay data may be presented by determining a minimum depth (or disparity) value for the scene in the underlying content. An additional depth buffer may be applied to obtain a target depth information such that the overlay data is presented with a gap between the overlay and the underlying content. Accordingly, the target depth value may be determined based on the content of the underlying scene.

However, challenges arise when presenting the overlay content using a different disparity than the underlying content, particular when the content and overlay is viewed from an angle, such as when a user is viewing the content using a head-mounted device and tilts their head. When this occurs, the three-dimensional content is typically configured to stay stationary compared to head movement such that a user can look around and the content will appear stationary. However, when the user tilts their head, the axis of the disparity no longer matches the axis of the user's eyes, or the axis of the stereo display. As a result, the content, and particularly the overlay content, may appear blurry or may give the user the experience of double vision. Accordingly, techniques described herein provide a technical solution to the problem arising from the difference in the axis along which disparity is provided and an axis of a user's eyes when viewing the content by providing an adjusted disparity which considers head orientation.

According to one or more embodiments, the disparity of overlay content is improved when a head is in a tilted orientation by reducing the disparity of the overlay content between the left eye image and the right eye image such that the depth of the captions to reduce an apparent depth gap between the underlying content and the overlay. In doing so, the difference in disparity between the overlay and the scene appears to be reduced, thereby reducing the effects of depth conflict.

According to one or more embodiments, disparity of the overlay content is adjusted in accordance with the tilt of the device. For example, rather than a disparity corresponding to a target depth that in only employed in a horizontal manner, vertical disparity is introduced such that the overall disparity remains the same, but is incorporated in both a vertical and horizontal manner. In doing so, the overlay will be rendered in the stereo frames in a manner that comports to a current head tilt, thereby improving the effectiveness of the overlay content.

Techniques described herein provide numerous technical benefits. For example, by adjusting the presentation overlay data in accordance with head tilt, depth conflict can be reduced or avoided. Further, techniques described herein provide a technical benefit to overlay presentation by adjusting the disparity of the overlay presentation based on dynamic determination of head tilt. Accordingly, techniques described herein are additionally directed to a novel image processing technique for 3D content and corresponding overlay content.

In the following description, for purposes of explanation, numerous specific details are set forth in order to provide a thorough understanding of the disclosed concepts. As part of this description, some of this disclosure's drawings represent structures and devices in block diagram form in order to avoid obscuring the novel aspects of the disclosed concepts. In the interest of clarity, not all features of an actual implementation may be described. Further, as part of this description, some of this disclosure's drawings may be provided in the form of flowcharts. The boxes in any particular flowchart may be presented in a particular order. It should be understood, however, that the particular sequence of any given flowchart is used only to exemplify one embodiment. In other embodiments, any of the various elements depicted in the flowchart may be deleted, or the illustrated sequence of operations may be performed in a different order, or even concurrently. In addition, other embodiments may include additional steps not depicted as part of the flowchart. Moreover, the language used in this disclosure has been principally selected for readability and instructional purposes and may not have been selected to delineate or circumscribe the inventive subject matter, it being necessary to resort to the claims in order to determine such inventive subject matter. Reference in this disclosure to "one embodiment" or to "an embodiment" means that a particular feature, structure, or characteristic described in connection with the embodiment is included in at least one embodiment of the disclosed subject matter, and multiple references to "one embodiment" or "an embodiment" should not necessarily be understood as all referring to the same embodiment.

It will be appreciated that, in the development of any actual implementation (as in any software and/or hardware development project), numerous decisions must be made to achieve a developer's specific goals (e.g., compliance with system- and business-related constraints) and that these goals may vary from one implementation to another. It will also be appreciated that such development efforts might be complex and time consuming but would nevertheless be a routine undertaking for those of ordinary skill in the design and implementation of multi-modal processing systems having the benefit of this disclosure.

Various examples of electronic systems and techniques for using such systems in relation to various technologies are described.

A physical environment, as used herein, refers to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics. As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and, in response, adjust graphical content and an acoustic field presented to the person in a manner similar to how such views and sounds would change in a physical environment. In some situations (e.g., for accessibility reasons), the XR system may adjust the characteristic(s) of graphical content in the XR environment in response to representations of physical motions (e.g., vocal commands).

There are many different types of electronic systems that enable a person to sense and/or interact with various XR environments. Examples include: head-mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head-mountable system may have one or more speaker(s) and an integrated opaque display. Alternatively, a head-mountable system may be configured to accept an external opaque display (e.g., a smartphone). The head-mountable system may incorporate one or more imaging sensors to capture images or video of the physical environment and/or one or more microphones to capture audio of the physical environment. Rather than an opaque display, a head-mountable system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

Reduction of Disparity

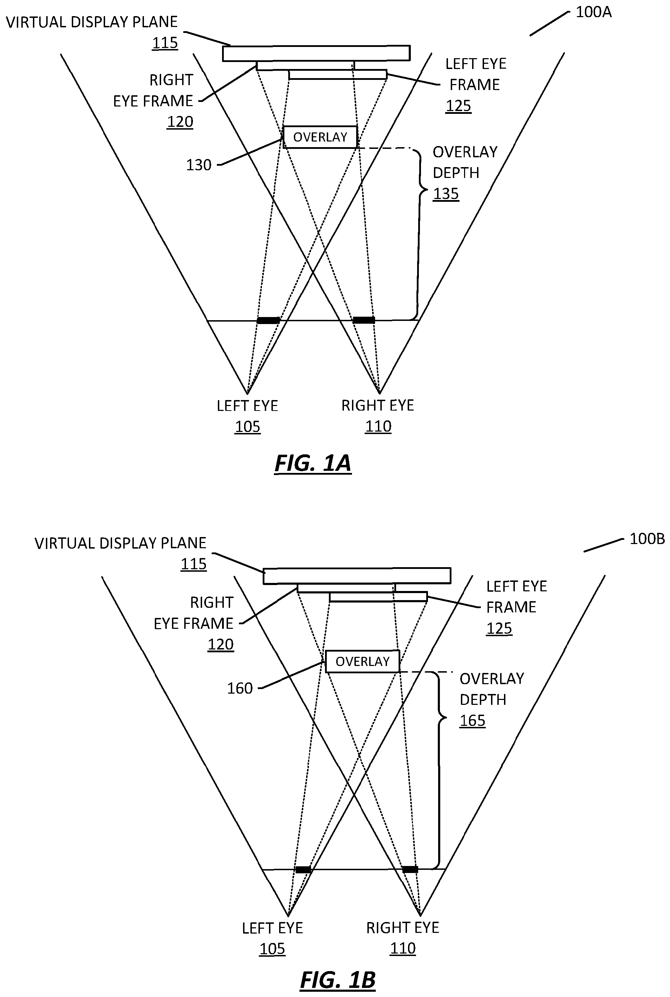

FIGs. 1A-1B show diagrams corresponding to a technique for determining disparity for overlay content, according to one or more embodiments. In particular, FIGs. 1A-1B depict diagrams of a technique for reducing disparity for overlay content in accordance with an orientation of a device. It should be understood that the particular types of encoded target depth data shown and explained are included for example purposes, and are not intended to limit the types of encoded target depth information.

In the diagram 100A, an example 3D video is shown in the form of a stereoscopic frame pair including left eye frame 125 and right eye frame 120. The 3D video data may be prerecorded video data, live video data, or the like. According to one or more embodiments, the right eye frame 120 and left eye frame 125 may present different perspectives of a scene at a particular disparity to provide a depth effect. Disparity generally relates to a displacement in visual correspondences between the two frames. Accordingly, the disparity can be indicative of an apparent or perceived depth to a user of a playback device. The stereoscopic frame pair may be presented on one or more display devices of an electronic device. For example, each frame may be presented on a user facing display on the electronic device. For example, left eye frame 125 may be presented in front of left eye 105, while right eye frame 120 may be presented in front of right eye 110. The disparity at which the right eye frame 120 and left eye frame 125 are presented may be determined based on a depth of a virtual display plane 115, which may indicate a plane in space onto which the image data is to be presented.

Overlay 130 may refer to image content which is presented in front of the 3D image data comprised in right eye frame 120 and left eye frame 125. In particular, overlay 130 may correspond to image content which may or may not be related to the underlying content in the right eye frame 120 and left eye frame 125. The overlay content 130 may be any data to be presented as an overlay over the underlying 3D video data in right eye frame 120 and left eye frame 125. Further, the overlay content 130 may or may not correspond to the 3D video data. As an example, the overlay content 130 may include captions or subtitles for the 3D video data which may be presented as text, or a as a graphical component having text. The overlay content 130 may alternatively correspond to a user interface (UI) component for a video player for the video data or other application, or the like.

According to one more embodiments, the overlay content 130 may be presented in front of the right eye frame 120 and left eye frame 125 at an overlay depth 135. In particular, the overlay content 130 is visible in front of the left eye frame 125 from the perspective of left eye 105, and in front of right eye frame 120 from the perspective of right eye 110. The overlay depth 135 may be associated with an original disparity of the overlay content in order to simulate the overlay content 130 presented at the overlay depth 135.

Turning to FIG. 1B, an example diagram of the technique is presented in which the disparity of the overlay content 130 is reduced such that a gap distance between the stereo frames of the three-dimensional video content (i.e., right eye frame 120 and left eye frame 125) and the overlay content 130 appears to be reduced. As a result, a depth conflict between the overlay content 130 and three-dimensional video content may lessen when viewed at an angle.

According to one or more embodiments, the disparity of overlay content is adjusted when a head is in a tilted orientation by reducing the disparity of the overlay content between the left eye image and the right eye image such that the depth of the captions to reduce an apparent depth gap between the underlying content and the overlay. In doing so, the difference in disparity between the overlay and the scene appears to be reduced, thereby reducing the effects of depth conflict. The technique is shown by the overlay depth 165 in FIG. 1B being greater than the overlay depth 135 of FIG. 1A. To do so, the disparity is decreased such that the overlay 160 is perceived in front of the left eye frame 125 from the perspective of the left eye 105, but the relative distance between the overlay 160 and the scene is relatively reduced when compared to the overlay depth 165. Similarly, the overlay 160 is perceived in front of the right eye frame 120 from the perspective of the right eye 110, and the relative distance between the overlay 160 and the scene is relatively reduced when compared to the overlay depth 165.

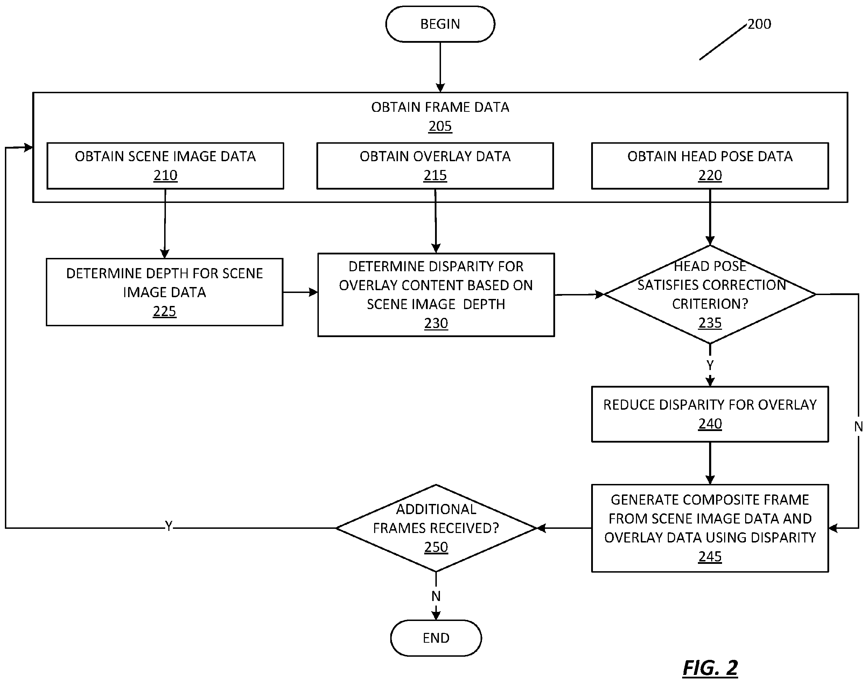

FIG. 2 shows a flowchart of a technique for reducing disparity for overlay content, in accordance with one or more embodiments. For purposes of explanation, the following steps will be described in the context of FIGs. 1A-1B. However, it should be understood that the various actions may be taken by alternate components. In addition, the various actions may be performed in a different order. Further, some actions may be performed simultaneously, and some may not be required, or others may be added, according to various embodiments.

The flowchart 200 begins at block 205, where frame data is obtained. In some embodiments, frame data may include image data, sensor data, and other data which may be used to generate a view of a scene having an overlay. Accordingly, obtaining frame data at block 205 includes obtaining scene image data at block 210. As described above, in some embodiments, the scene image data may include 3D image data, or image data from which depth information may be determined or provided in accordance with the content of the scene. As an example, the scene image data may include image data captured by depth camera, stereoscopic image data, or the like. Thus, the scene image data may include a series of individual frames, a series of stereoscopic image pairs corresponding to individual frames, and the like. The scene image data 210 may be obtained from a network device or remote service, such as a media distribution platform, or may be stored locally on a playback device.

Obtaining frame data at block 205 may additionally include obtaining overlay data at block 215. According to one or more embodiments, a playback device may receive overlay data from an overlay source, which may be the same or different as the source for the scene image data obtained at block 210. For example, the overlay data may include subtitles provided on a same platform as the scene image data. Alternatively, the overlay data may be obtained from another source, or may be generated locally, such as with application-specific UI components or the like which are configured to be overlaid on the 3D video data. Accordingly, the overlay data obtained at block 215 may or may not be related to the scene image data obtained at block 210.

Obtaining frame data at block 205 also includes obtaining head pose data at block 220. According to one or mor embodiments, the head pose data may correspond to an orientation of a playback device presenting the scene image data. According to one or more embodiments, the head pose data may include orientation information for a head-mounted device, and may be captured or derived from sensor data collected by one or more positional sensors, such as an inertial measurement unit (IMU), gyroscope, magnetometer, accelerometer, and/or other orientation sensor as part of the first ear worn device. The orientation information may indicate a direction the head-mounted device is oriented within a physical environment. The orientation of the first ear worn device may be determined in a number of ways. For example, visual inertial odometry (VIO) or other localization techniques may be used to determine a position and/or orientation of the head-mounted device. In some embodiments, the orientation information may be determined based on IMU data or other positional sensor data without the use of visual, or camera, data.

Returning to block 210, once the scene image data is obtained, then a target depth for the scene image data is determined. According to one or more embodiments, the target depth for the scene image data may be provided with the scene image data, or may be determined locally. For example, depth information for the scene may be obtained and used to determine a target depth for the scene image data. According to some embodiments, the depth information may be derived from the image data. For example, a depth map may be calculated for the image data. In some embodiments, the image data may include stereoscopic images comprised of image pairs per frame. The depth of the stereoscopic image data may be determined with respect to disparity. More specifically, the depth of the stereoscopic image data may be a function of the disparity of the content along with a size and placement of a viewing pane, such as a playback window. For example, a disparity map may be calculated for a given image pair of the frame. The depth can be determined during playback based on the disparity and the placement and size of the viewing pane.

Upon determining scene image depth and obtaining overlay data, the flowchart proceeds to block 230, where disparity for the overlay content is determined based on the scene image depth. In some embodiments, the disparity may be determined prior to obtaining the overlay data, as the disparity is determined based on the scene image data. In some embodiments, the disparity may be based on a target depth for the overlay content. The target depth value indicates a depth at which overlay content to be rendered on the scene image data for the associated frame. Accordingly, the target depth value is associated with the content of the underlying scene image data, and may be used to render any kind of overlay content. Said another way, in some embodiments, the target depth value is determined independent of the overlay content.

The flowchart proceeds to block 235, where a determination is made as to whether a head pose satisfies a correction criterion. In particular, a determination may be made as to whether a playback device is substantially tilted such that the disparity of the overlay content should be adjusted. In some embodiments, the head pose data obtained at block 220 may be in the form of six degrees of freedom, where three of the values correspond to the orientation of the device. The orientation information may be compared against a reference value to determine a measure of head tilt. The head tilt may be compared to a correction criterion, such as a threshold measure of head tilt at which the disparity should be adjusted. In some embodiments, a subset of the orientation values may be considered, such as roll values which take into consideration the tilt of the head from left to right.

If a determination is made at block 235 that the head pose satisfies a correction criterion, then the flowchart 200 proceeds to block 240. At block 240, the disparity for the overlay is reduced. In some embodiments, the disparity may be reduced by a predefined amount, such as a proportion or percentage of the scene depth. In some embodiments, the disparity may be reduced in accordance with a magnitude of the tilt. For example, the greater the amount of head tilt, the more the disparity may be reduced. Further, in some embodiments, the disparity may be reduced in accordance with a user-specific, device-specific, or content-specific parameter.

The flow chart proceeds to block 245. Further, returning to block 235, if a determination is made that the head pose fails to satisfy the correction criterion, and the flowchart 200 also proceeds to block 245. At block 245, a composite frame or frame pair is generated from the scene image data and the overlay data using the disparity. That is, if the head pose satisfied the correction criterion, then the composite frame or frame pair will be generated using the reduced disparity. In contrast, if the head pose failed to satisfy the correction criterion at block 235, then the composite frame is generated with the disparity determined at block 230. That is, the disparity is not adjusted based on head tilt. Although not shown, the frames or frame pair may then be presented by the playback device, for example on stereo displays affixed in the device in front of each eye of a user. The flow chart then proceeds to block 250, and the process continues as long as additional frames are received.

Reorientation of Disparity

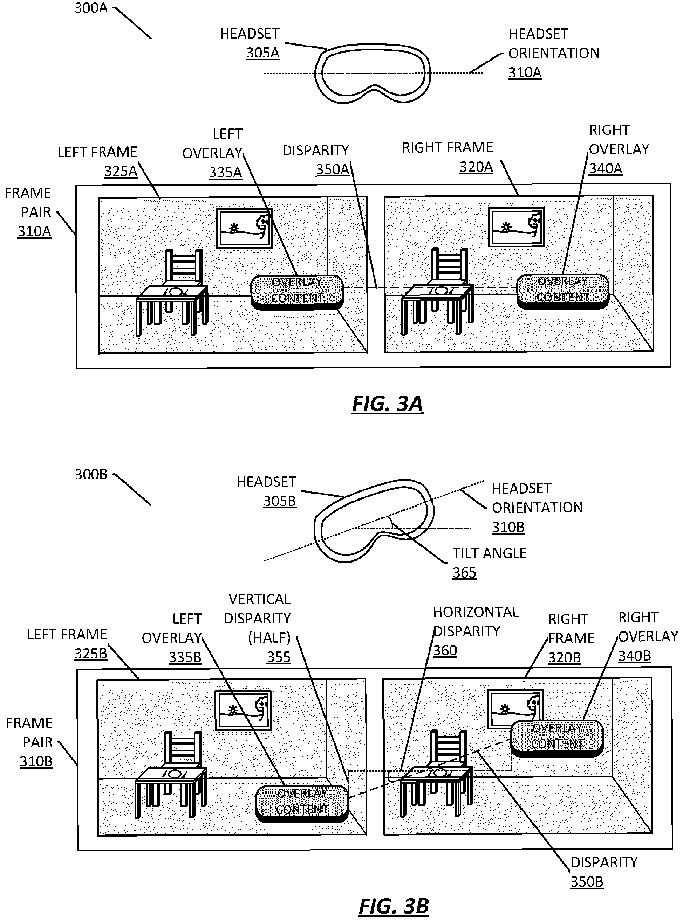

FIGs. 3A-3B show diagrams corresponding to a technique for adjusting disparity for overlay content, according to one or more embodiments. In particular, FIGs. 3A-3B depict diagrams of a technique for incorporating vertical as well as horizontal components of disparity for overlay content in accordance with an orientation of a device. It should be understood that the particular types of components shown and explained are included for example purposes, and are not intended to limit the types of encoded target depth information.

In the diagram 300A, 3D video data in the form of an example stereoscopic frame pair 310A is presented from the point of view of headset 305A. That is, the stereoscopic frame pair 310A may be presented on one or more display devices of the headset 305A. The 3D video data may be prerecorded video data, live video data, or the like. As shown, headset 305A is presented in a first orientation 310A, and is neither tilted to the left or to the right. The frame pair 310A includes left eye frame 325A and right eye frame 320A. According to one or more embodiments, the right eye frame 320A and left eye frame 325A may present different perspectives of a scene at a particular disparity to provide a depth effect. For example, left eye frame 325A may be presented in front of a left eye, while right eye frame 320A may be presented in front of a right eye. The disparity at which the right eye frame 320A and left eye frame 325A are presented may be determined based on a depth of a virtual display plane, which may indicate a plane in space onto which the image data is to be presented.

When presented to the user, each frame of the frame pair may incorporate overlay content. Overlay content may refer to image content which is presented in front of the 3D image data comprised in right eye frame 120 and left eye frame 125. Further, the overlay content may or may not correspond to the 3D video data. As an example, the overlay content may include captions or subtitles for the 3D video data which may be presented as text, or a as a graphical component having text. The overlay content may alternatively correspond to a user interface (UI) component for a video player for the video data or other application, or the like. As shown, left overlay 335A is presented in a first position in left frame 325A, whereas right overlay 340A is presented in a different position in right frame 320A. This is because the disparity of the scene data in the frame, including the view of the room with the table and chair, is presented to the user with a different disparity than the overlay content. As a result, the overlay content will appear to be at a different depth than the underlying scene image data. The disparity used to present the overlay content may be determined in a number of ways, as described above with respect to block 230 of FIG. 2. Further, the disparity may be adjusted if a determination is made that the orientation of the headset satisfies a correction criterion. Because the headset orientation 310A is flat and does not indicate a head tilt, the left overlay 335A and right overlay 340A may be presented using disparity in a horizontal direction, without consideration of a vertical direction.

Turning to FIG. 3B, an example diagram of the technique is presented in which the disparity of the overlay content is adjusted in accordance with a headset orientation 310B. As a result, the appearance of the overlay content will better align with the eyes of the user viewing the content.

According to one or more embodiments, the disparity of overlay content is adjusted when a head is in a tilted orientation by incorporating vertical as well as horizontal components of the disparity of the overlay content between the left eye image and the right eye image. In doing so, the difference in a direction of the disparity and the headset orientation is better aligned, thereby reducing the effects of depth conflict. In diagram 300B, headset 305B is tilted to the left by approximately 20° shown at tilt angle 365. For purposes of the example, the 20° tilt may be considered to satisfy the correction criterion.

In order to adjust the disparity, the disparity may be reoriented in accordance with a head or headset orientation. According to one or more embodiments, an overall distance or magnitude may stay the same. For example, a length of disparity 350A may equal or be equivalent to the length of disparity 350B. However, the disparity will incorporate a vertical disparity and horizontal disparity. In particular, the tilt angle 365 or another related value may be applied to the disparity 350B. Thus, a vertical component of the disparity may be determined as:

$$Disp_{vert} = Disp * \sin(tilt)$$

where *Disp* corresponds to the length of the disparity, and where *tilt* corresponds to the tilt angle of the headset, and $Disp_{vert}$ corresponds to the vertical disparity. Accordingly, the solved value for $\left(\frac{1}{2}\right) Disp_{vert}$ may indicate a vertical offset of overlay content between a frame in which the headset is not tilted, and a frame in which the headset is tilted, as shown by vertical disparity (half) 355. In the example shown, left overlay 335B is lower in the frame by the solved value than left overlay 335A, whereas right overlay 340B is higher in the frame by the solved value than right overlay 340A.

Similarly, a horizontal component of the disparity may be determined as:

$$Disp_{horiz} = Disp * \cos(tilt)$$

where $Disp_{horiz}$ corresponds to the horizontal disparity 360. Accordingly, the solved value for $Disp_{horiz}$ may indicate a total length of the disparity, and will be reduced from the overall disparity.

Accordingly, the horizontal offset may be determined by $\frac{1}{2}(Disp - Disp_{horiz})$. In the example shown, left overlay 335B is adjusted to the right in the frame by the solved value from left overlay 335A, whereas right overlay 340B is adjusted to the left in the right frame 320B by the solved value from right overlay 340A.

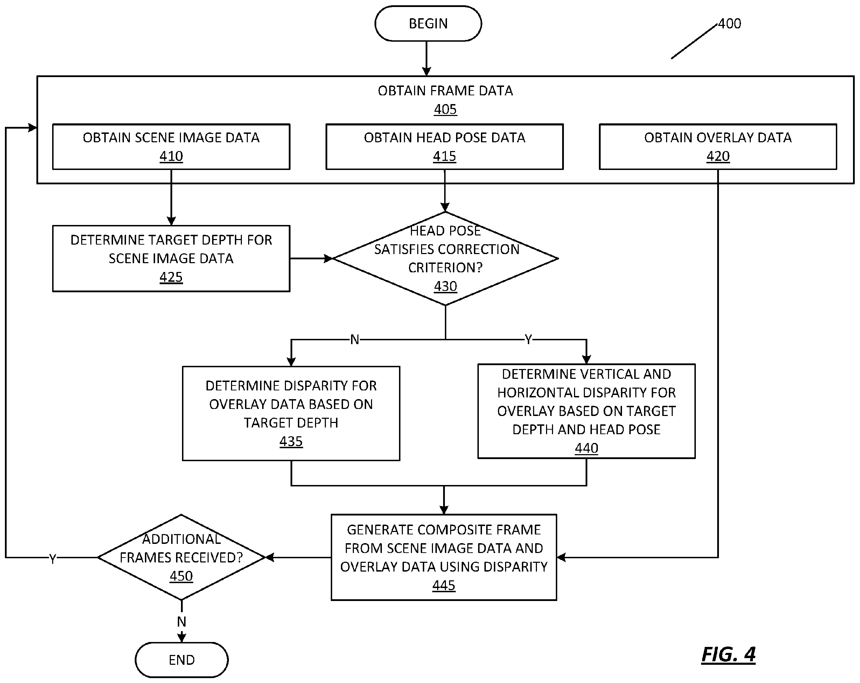

FIG. 4 shows a flowchart of a technique for adjusting disparity for overlay content, in accordance with one or more embodiments. For purposes of explanation, the following steps will be described in the context of FIGs. 3A-3B. However, it should be understood that the various actions may be taken by alternate components. In addition, the various actions may be performed in a different order. Further, some actions may be performed simultaneously, and some may not be required, or others may be added, according to various embodiments.

The flowchart 400 begins at block 405, where frame data is obtained. In some embodiments, frame data may include image data, sensor data, and other data which may be used to generate a view of a scene having an overlay. Accordingly, obtaining frame data at block 405 includes obtaining scene image data at block 410. As described above, in some embodiments, the scene image data may include 3D image data, or image data from which depth information may be determined or provided in accordance with the content of the scene. As an example, the scene image data may include image data captured by depth camera, stereoscopic image data, or the like. Thus, the scene image data may include a series of individual frames, a series of stereoscopic image pairs corresponding to individual frames, and the like. The scene image data 410 may be obtained from a network device or remote service, such as a media distribution platform, or may be stored locally on a playback device.

Obtaining frame data at block 405 also includes obtaining head pose data at block 415. According to one or mor embodiments, the head pose data may correspond to an orientation of a playback device presenting the scene image data. According to one or more embodiments, the head pose data may include orientation information for a head-mounted device, and may be captured or derived from sensor data collected by one or more positional sensors, such as an inertial measurement unit (IMU), gyroscope, magnetometer, accelerometer, and/or other orientation sensor as part of the first ear worn device. The orientation information may indicate a direction the head-mounted device is oriented within a physical environment. The orientation of the first ear worn device may be determined in a number of ways. For example, visual inertial odometry (VIO) or other localization techniques may be used to determine a position and/or orientation of the head-mounted device. In some embodiments, the orientation information may be determined based on IMU data or other positional sensor data without the use of visual, or camera, data.

Obtaining frame data at block 405 may additionally include obtaining overlay data at block 420. According to one or more embodiments, a playback device may receive overlay data from an overlay source, which may be the same or different as the source for the scene image data obtained at block 410. For example, the overlay data may include subtitles provided on a same platform as the scene image data. Alternatively, the overlay data may be obtained from another source, or may be generated locally, such as with application-specific UI components or the like which are configured to be overlaid on the 3D video data. Accordingly, the overlay data obtained at block 420 may or may not be related to the scene image data obtained at block 410.

Returning to block 410, once the scene image data is obtained, then a target depth for the scene image data is determined at block 425. According to one or more embodiments, the target depth for the scene image data may be provided with the scene image data, or may be determined locally. For example, depth information for the scene may be obtained and used to determine a target depth for the scene image data. According to some embodiments, the depth information may be derived from the image data. For example, a depth map may be calculated for the image data. In some embodiments, the image data may include stereoscopic images comprised of image pairs per frame. The depth of the stereoscopic image data may be determined with respect to disparity. More specifically, the depth of the stereoscopic image data may be a function of the disparity of the content along with a size and placement of a viewing pane, such as a playback window. For example, a disparity map may be calculated for a given image pair of the frame. The depth can be determined during playback based on the disparity and the placement and size of the viewing pane.

Upon determining scene image depth, the flowchart proceeds to block 430, where a determination is made as to whether a head pose satisfies a correction criterion. In particular, a determination may be made as to whether a playback device is substantially tilted such that the disparity of the overlay content should be adjusted. In some embodiments, the head pose data obtained at block 415 may be in the form of six degrees of freedom, where three of the values correspond to the orientation of the device. The orientation information may be compared against a reference value to determine a measure of head tilt. The head tilt may be compared to a correction criterion, such as a threshold measure of head tilt at which the disparity should be adjusted. In some embodiments, a subset of the orientation values may be considered, such as roll values which take into consideration the tilt of the head from left to right.

If a determination is made at block 430 that the head pose fails to satisfy a correction criterion, then the flowchart 400 proceeds to block 440. At block 435, the disparity for the overlay is determined based on the target depth of the underlying scene image data determined at block 425. For example, a target depth for the overlay may be determined as a particular distance in front of the scene image depth, or closer to the user. In some embodiments, the disparity may be based on a target depth for the overlay content. The target depth value indicates a depth at which overlay content to be rendered on the scene image data for the associated frame. Accordingly, the target depth value is associated with the content of the underlying scene image data, and may be used to render any kind of overlay content. Said another way, in some embodiments, the target depth value is determined independent of the overlay content. The disparity determined at block 435 may have a horizontal component and may not have a vertical component. That is, the disparity direction aligns with the disparity direction of the underlying scene.

Returning to block 430, if a determination is made that the head pose satisfies a correction criterion, then the flowchart 400 proceeds to block 440. At block 440, the disparity for the overlay is determined using vertical and horizontal components. In some embodiments, the disparity may be based on a target depth for the overlay data based on the target depth for the scene image data determined at block 425. The overall measure of the disparity may be the same in block 435 and block 445, but the directional components may differ. That is, the disparity determined in block 440 may be determined to include horizontal and vertical components, as described above with respect to FIG. 3. In some embodiments, the amount of the disparity in each component may be based on the head pose, such that the disparity aligns with the display devices, the user's eyes, or the like, when the head is tilted.

disparity for the overlay is reduced. In some embodiments, the disparity may be reduced by a predefined amount, such as a proportion or percentage of the scene depth. In some embodiments, the disparity may be reduced in accordance with a magnitude of the tilt. For example, the greater the amount of head tilt, the more the disparity may be reduced. Further, in some embodiments, the disparity may be reduced in accordance with a user-specific, device-specific, or content-specific parameter.

The flow chart proceeds to block 445, where a composite frame or frame pair is generated from the scene image data and the overlay data using the disparity. That is, if the head pose satisfied the correction criterion, then the composite frame or frame pair will be generated at block 440. In contrast, if the head pose failed to satisfy the correction criterion at block 430, then the composite frame is generated with the disparity determined at block 435. Although not shown, the frames or frame pair may then be presented by the playback device, for example on stereo displays affixed in the device in front of each eye of a user. The flow chart then proceeds to block 450, and the process continues as long as additional frames are received.

Example System Diagrams

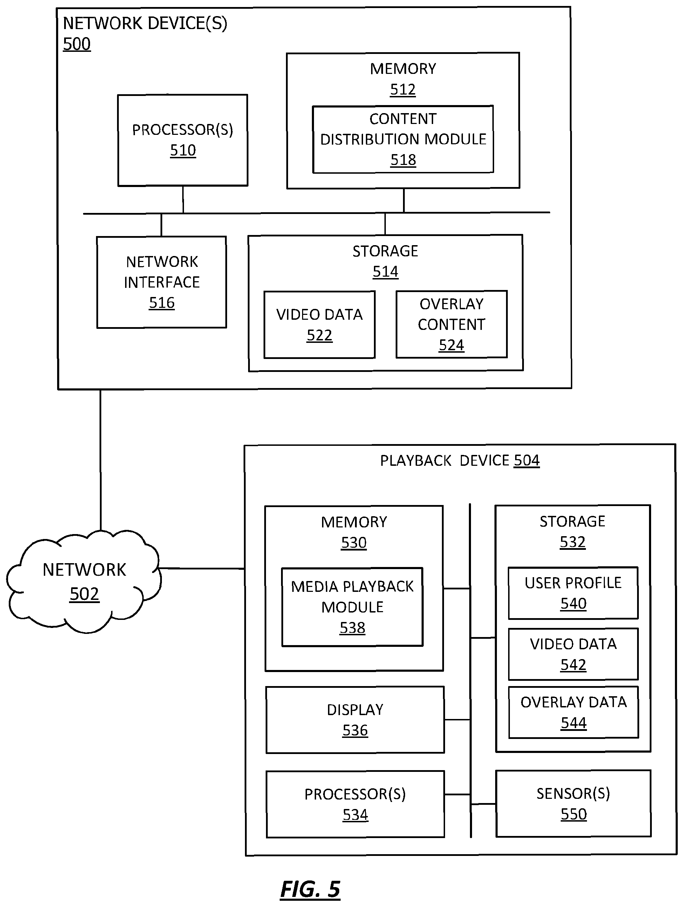

FIG. 5 shows, in block diagram form, an example network diagram, according to one or more embodiments. Specifically, FIG. 5 depicts a playback device 504 in the form of a computer system having media playback capabilities. Playback device 504 may be an electronic device, and/or may be part of a multifunctional device, such as a mobile phone, tablet computer, personal digital assistant, portable music/video player, wearable device, head-mounted system, projection-based system, base station, laptop computer, desktop computer, network device, or any other electronic system such as those described herein having the capability of presenting 3D image data with overlay content. Playback device 504 may be connected to other devices across a network 502 such as one or more network device(s) 500. Illustrative networks include, but are not limited to, a local network such as a universal serial bus (USB) network, an organization's local area network, and a wide area network such as the Internet.

Each of network device(s) 500 may include one or more processor(s) 510. Processor(s) 510 may include, central processing units (CPUs), a system-on-chip such as those found in mobile devices and include one or more dedicated graphics processing units (GPUs). Further, processor(s) 510 may include multiple processors of the same or different type. Each of the network device(s) 500 may also include a memory, such as memory 512. Each memory may include one or more different types of memory, which may be used for performing device functions in conjunction with one or more processors, such as processor(s) 510. For example, each memory may include cache, ROM, RAM, or any kind of transitory or non-transitory computer-readable storage medium capable of storing computer-readable code. Each memory may store various programming modules for execution by processors, including content distribution module 518. Each of network device(s) 500 may also include storage, such as storage 514, which may include one or more storage devices. Each storage device may include one more non-transitory computer-readable mediums, including, for example, magnetic disks (fixed, floppy, and removable) and tape, optical media such as CD-ROMs and digital video disks (DVDs), and semiconductor memory devices such as Electrically Programmable Read-Only Memory (EPROM) and Electrically Erasable Programmable Read-Only Memory (EEPROM). According to one or more embodiments, storage 514 may be configured to store data for three-dimensional content, such as video data 522 and overlay content 524. Video data 522 may include three-dimensional image data in the form of stereoscopic image frames. Overlay content 524 may be graphical content configured to be presented over, or in front of, the video data 522. Examples of overlay content 524 may include user interface components, logos, captions, or other content presented with the video data 522. In some embodiments, the overlay content 524 may or may not be related to or associated with the video data with which the overlay content is presented.

According to one or more embodiment, content distribution module 518 may include instructions for providing content for a 3D video presentation, such as video data 522 and/or overlay content 524. In some embodiments, the network device(s) 500 may provide the content in response to a request from the playback device 504. In some embodiments, the content distribution module may additionally determine and/or provide depth information for the video data 522. The video data 522, overlay content 524, and/or other data used for presentation of three-dimensional video data may be transmitted by the network device(s) 500 to the playback device 504 over network 502.

The playback device 504 may include one or more processor(s) 534. Processor(s) 534 may include, central processing units (CPUs), a system-on-chip such as those found in mobile devices and include one or more dedicated graphics processing units (GPUs). Further, processor(s) 534 may include multiple processors of the same or different type. Each of the network device(s) 500 may also include a memory, such as memory 530. Each memory may include one or more different types of memory, which may be used for performing device functions in conjunction with one or more processors, such as processor(s) 534. For example, each memory may include cache, ROM, RAM, or any kind of transitory or non-transitory computer-readable storage medium capable of storing computer-readable code. Each memory may store various programming modules for execution by processors, including media playback module 538. The playback device 504 may also include storage, such as storage 532. Each storage may include one more non-transitory computer-readable mediums, including, for example, magnetic disks (fixed, floppy, and removable) and tape, optical media such as CD-ROMs and digital video disks (DVDs), and semiconductor memory devices such as Electrically Programmable Read-Only Memory (EPROM) and Electrically Erasable Programmable Read-Only Memory (EEPROM). Each storage may include data such as user profile data 540, video data 542, and overlay data 544.

According to one or more embodiment, the media playback module 538 may include instructions to render video data, such as video data 522 or 542 with overlay content, such as overlay content 524 or overlay data 544. In some embodiments, media playback module 538 may be configured to render frames of the video data having overlay data at a depth based on depth information for the content of the video data. In some embodiments, the depth at which the overlay content is rendered may be based on an orientation of the playback device 504. For example, the media playback module 538 may be configured to determine whether an orientation of the playback device 504 satisfies a correction criterion. The determination may be based on sensor data, for example from sensor(s) 550 which may include one or more positional sensors, such as an accelerometer, gyroscope, inertial motion unit (IMU), or the like.

In some embodiments, the media playback module 538 may further be configured to adjust the apparent depth of overlay data based on the device orientation. In some embodiments, a disparity of a left and right frame of overlay content may be reduced to cause the overlay content to appear to be closer to the 3D video content. As another example, a placement of the overlay content in the left frame and right frame may be adjusted to incorporate vertical and horizontal disparity in accordance with the orientation of the playback device 504.

The playback device 504 may allow a user to interact with extended reality (XR) environments, for example via display 526. There are many different types of electronic systems that enable a person to sense and/or interact with various XR environments. Examples include head-mounted systems, projection-based systems, heads-up displays (HUDs), vehicle windshields having integrated display capability, windows having integrated display capability, displays formed as lenses designed to be placed on a person's eyes (similar to contact lenses), headphones/earphones, speaker arrays, input systems (e.g., wearable or handheld controllers with or without haptic feedback), smartphones, tablets, and desktop/laptop computers. A head-mounted system may have one or more speaker(s) and an integrated opaque display. Alternatively, a head-mounted system may be configured to accept an external opaque display (e.g., a smartphone). The head-mounted system may incorporate one or more imaging sensors to capture images or video of the physical environment, and/or one or more microphones to capture audio of the physical environment. Rather than an opaque display, a head-mounted system may have a transparent or translucent display. The transparent or translucent display may have a medium through which light representative of images is directed to a person's eyes. The display device 536 may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one embodiment, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

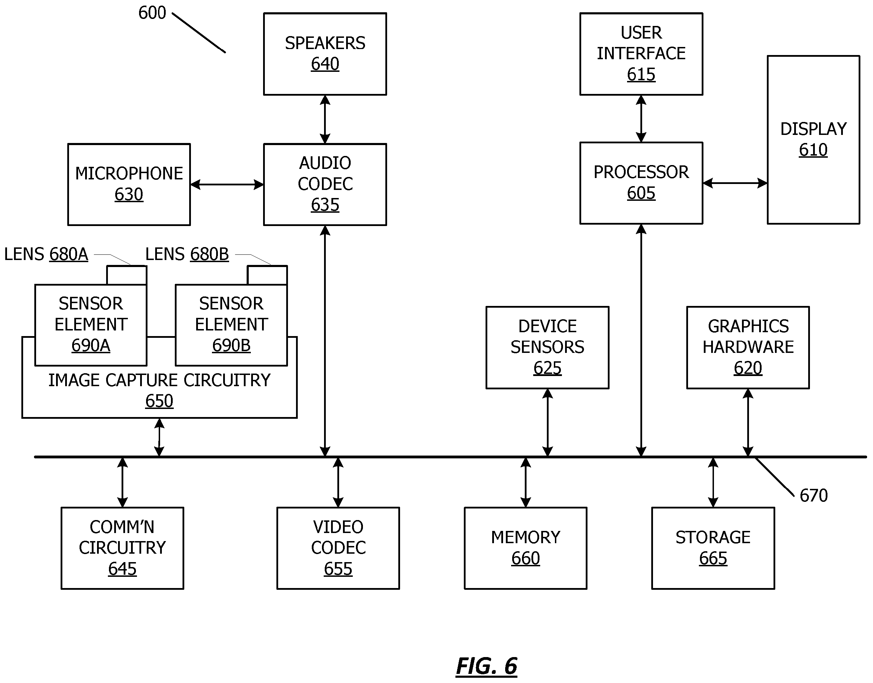

Referring now to FIG. 6, a simplified functional block diagram of illustrative multifunction electronic device 600 is shown according to one embodiment. The electronic device may be a multifunctional electronic device or may have some or all of the components of a multifunctional electronic device described herein. Multifunction electronic device 600 may include some combination of processor 605, display 610, user interface 615, graphics hardware 620, device sensors 625 (e.g., proximity sensor/ambient light sensor, accelerometer and/or gyroscope), microphone 630, audio codec 635, speaker(s) 640, communications circuitry 645, digital image capture circuitry 650 (e.g., including camera system), memory 660, storage device 665, and communications bus 670. Multifunction electronic device 600 may be, for example, a mobile telephone, personal music player, wearable device, tablet computer, or the like.

Processor 605 may execute instructions necessary to carry out or control the operation of many functions performed by device 600. Processor 605 may, for instance, drive display 610 and receive user input from user interface 615. User interface 615 may allow a user to interact with device 600. For example, user interface 615 can take a variety of forms, such as a button, keypad, dial, click wheel, keyboard, display screen, touch screen, and the like. Processor 605 may also, for example, be a system-on-chip, such as those found in mobile devices, and include a dedicated GPU. Processor 605 may be based on reduced instruction-set computer (RISC) or complex instruction-set computer (CISC) architectures or any other suitable architecture and may include one or more processing cores. Graphics hardware 620 may be special purpose computational hardware for processing graphics and/or assisting processor 605 to process graphics information. In one embodiment, graphics hardware 620 may include a programmable GPU.

Image capture circuitry 650 may include one or more lens assemblies, such as lens 680A and 680B. The lens assembly may have a combination of various characteristics, such as differing focal length and the like. For example, lens assembly 680A may have a short focal length relative to the focal length of lens assembly 680B. Each lens assembly may have a separate associated sensor element 690A and 690B. Alternatively, two or more lens assemblies may share a common sensor element. Image capture circuitry 650 may capture still images, video images, enhanced images, and the like. Output from image capture circuitry 650 may be processed, at least in part, by video codec(s) 655, processor 605, graphics hardware 620, and/or a dedicated image processing unit or pipeline incorporated within communications circuitry 645. Images so captured may be stored in memory 660 and/or storage 665.

Memory 660 may include one or more different types of media used by processor 605 and graphics hardware 620 to perform device functions. For example, memory 660 may include memory cache, read-only memory (ROM), and/or random-access memory (RAM). Storage 665 may store media (e.g., audio, image, and video files), computer program instructions or software, preference information, device profile information, and any other suitable data. Storage 665 may include one more non-transitory computer-readable storage mediums, including, for example, magnetic disks (fixed, floppy, and removable) and tape, optical media such as CD-ROMs and DVDs, and semiconductor memory devices such as EPROM and EEPROM. Memory 660 and storage 665 may be used to tangibly retain computer program instructions or computer-readable code organized into one or more modules and written in any desired computer programming language. When executed by, for example, processor 605, such computer program code may implement one or more of the methods described herein.

It is to be understood that the above description is intended to be illustrative and not restrictive. The material has been presented to enable any person skilled in the art to make and use the disclosed subject matter as claimed and is provided in the context of particular embodiments, variations of which will be readily apparent to those skilled in the art (e.g., some of the disclosed embodiments may be used in combination with each other). Accordingly, the specific arrangement of steps or actions shown in FIGs. 2 and 4, or the arrangement of elements shown in FIGs. 1, 3, and 5-6 should not be construed as limiting the scope of the disclosed subject matter. The scope of the invention, therefore, should be determined with reference to the appended claims, along with the full scope of equivalents to which such claims are entitled. In the appended claims, the terms "including" and "in which" are used as the plain English equivalents of the respective terms "comprising" and "wherein."

Exemplary methods, systems, and non-transitory computer-readable storage media are set out in the following items.

ITEM LIST 1:

1. A non-transitory computer readable medium comprising computer readable code executable by one or more processors to:

obtain, by a head-mounted device, 3D scene image data comprising stereo images;
determine depth information for one or more frames of the scene image data, wherein the depth information corresponds to one or more depth values for content in the scene image data;
determine a target depth value for overlay image data for the one or more frames based on the depth information;
present the overlay image data over the stereo images at a disparity determined based on the target depth value;
in accordance with a determination that an orientation of the head-mounted device satisfies a correction criterion:

> determine an adjusted target depth value for the overlay image data greater than the target depth value, and
> reduce the disparity of the overlay image data in accordance with the adjusted target depth value.

2. The non-transitory computer readable medium of item 1, wherein the target depth value is different than the depth values for the content in the scene image data, and the adjusted target depth value is closer to the one or more depth values for the content in the scene image data than the target depth value.

3. The non-transitory computer readable medium of item 1, further comprising computer readable code to:

> determine the orientation of the head-mounted device based on motion sensor data from the head-mounted device; and
> determine that the orientation of the head-mounted device satisfies the correction criterion based on a determination that a tilt of the head-mounted device satisfies a predefined threshold based on the motion sensor data.

4. The non-transitory computer readable medium of item 3, wherein the adjusted target depth value is determined in accordance with a magnitude of the tilt of the head-mounted device.

5. The non-transitory computer readable medium of item 3, further comprising computer readable code to:

> determine an updated orientation of the head-mounted device based on additional motion sensor data from the head-mounted device; and
> in response to a determination that that the updated orientation of the head-mounted device fails to satisfy the correction criterion, adjust the disparity of the overlay image data in accordance with the target depth value.

6. The non-transitory computer readable medium of item 1, wherein the overlay image data comprises text.

7. A method comprising:

> obtaining, by a head-mounted device, 3D scene image data comprising stereo images;
> determining depth information for one or more frames of the scene image data, wherein the depth information corresponds to one or more depth values for content in the scene image data;
> determining a target depth value for overlay image data for the one or more frames based on the depth information;
> presenting the overlay image data over the stereo images at a disparity determined based on the target depth value;
> in accordance with a determination that an orientation of the head-mounted device satisfies a correction criterion:

>> determining an adjusted target depth value for the overlay image data greater than the target depth value, and
>> reducing the disparity of the overlay image data in accordance with the adjusted target depth value.

8. The method of item 7, wherein the target depth value is different than the depth values for the content in the scene image data, and the adjusted target depth value is closer to the one or more depth values for the content in the scene image data than the target depth value.

9. The method of item 7, further comprising:

> determining the orientation of the head-mounted device based on motion sensor data from the head-mounted device; and
> determining that the orientation of the head-mounted device satisfies the correction criterion based on a determination that a tilt of the head-mounted device satisfies a predefined threshold based on the motion sensor data.

10. The method of item 9, wherein the adjusted target depth value is determined in accordance with a magnitude of the tilt of the head-mounted device.

11. The method of item 9, further comprising:

> determining an updated orientation of the head-mounted device based on additional motion sensor data from the head-mounted device; and
> in response to a determination that that the updated orientation of the head-mounted device fails to satisfy the correction criterion, adjusting the disparity of the overlay image data in accordance with the target depth value.

12. The method of item 7, wherein the overlay image data comprises text.

13. A system comprising:

one or more processors; and
one or more computer readable media comprising computer readable code executable by the one or more processors to:

obtain, by a head-mounted device, 3D scene image data comprising stereo images;
determine depth information for one or more frames of the scene image data, wherein the depth information corresponds to one or more depth values for content in the scene image data;
determine a target depth value for overlay image data for the one or more frames based on the depth information;
present the overlay image data over the stereo images at a disparity determined based on the target depth value;
in accordance with a determination that an orientation of the head-mounted device satisfies a correction criterion:

determine an adjusted target depth value for the overlay image data greater than the target depth value, and
reduce the disparity of the overlay image data in accordance with the adjusted target depth value.

14. The system of item 13, wherein the target depth value is different than the depth values for the content in the scene image data, and the adjusted target depth value is closer to the one or more depth values for the content in the scene image data than the target depth value.

15. The system of item 13, further comprising computer readable code to:

determine the orientation of the head-mounted device based on motion sensor data from the head-mounted device; and
determine that the orientation of the head-mounted device satisfies the correction criterion based on a determination that a tilt of the head-mounted device satisfies a predefined threshold based on the motion sensor data.

16. The system of item 15, wherein the adjusted target depth value is determined in accordance with a magnitude of the tilt of the head-mounted device.

17. The system of item 15, further comprising computer readable code to:

determine an updated orientation of the head-mounted device based on additional motion sensor data from the head-mounted device; and
in response to a determination that that the updated orientation of the head-mounted device fails to satisfy the correction criterion, adjust the disparity of the overlay image data in accordance with the target depth value.

18. The system of item 13, wherein the overlay image data comprises text.

19. A non-transitory computer readable medium comprising computer readable code executable by one or more processors to:

obtain, by a head-mounted device, 3D scene image data comprising stereo images;
obtain overlay image data for presentation on the 3D scene image data;
present overlay image data over the stereo images at a first disparity determined based on a depth value of the 3D scene image data;
obtain orientation information of the head-mounted device; and
in accordance with a determination that an orientation of the head-mounted device satisfies a correction criterion:

determine, based on the first disparity and the orientation information, a second disparity comprising an adjusted vertical and an adjusted horizontal disparity, and
apply the adjusted vertical disparity and the adjusted horizontal disparity to the overlay image data.

20. The non-transitory computer readable medium of item 19, wherein a distance corresponding to the first disparity is equivalent to a distance corresponding to the second disparity.

21. The non-transitory computer readable medium of item 19, wherein an axis of the second disparity comports with an axis of the orientation of the head-mounted device.

22. The non-transitory computer readable medium of item 19, further comprising computer readable code to:

determine the orientation of the head-mounted device based on motion sensor data from the head-mounted device; and
determine that the orientation of the head-mounted device satisfies the correction criterion based on a determination that a tilt of the head-mounted device satisfies a predefined threshold based on the motion sensor data.

23. The non-transitory computer readable medium of item 22, wherein the adjusted vertical disparity and the adjusted horizontal disparity are determined in accordance with a magnitude of the tilt of the head-mounted device.

24. The non-transitory computer readable medium of item 19, wherein the overlay image data comprises text.

25. A method comprising:

obtaining, by a head-mounted device, 3D scene image data comprising stereo images;
obtaining overlay image data for presentation on the 3D scene image data;
presenting overlay image data over the stereo images at a first disparity determined based on a depth value of the 3D scene image data;
obtaining orientation information of the head-mounted device; and
in accordance with a determination that an orientation of the head-mounted device satisfies a correction criterion:

determining, based on the first disparity and the orientation information, a second disparity comprising an adjusted vertical and an adjusted horizontal disparity, and
applying the adjusted vertical disparity and the adjusted horizontal disparity to the overlay image data.

26. The method of item 25, wherein a distance corresponding to the first disparity is equivalent to a distance corresponding to the second disparity.

27. The method of item 25, wherein an axis of the second disparity comports with an axis of the orientation of the head-mounted device.

28. The method of item 25, further comprising:

determining the orientation of the head-mounted device based on motion sensor data from the head-mounted device; and
determining that the orientation of the head-mounted device satisfies the correction criterion based on a determination that a tilt of the head-mounted device satisfies a predefined threshold based on the motion sensor data.

29. The method of item 28, wherein the adjusted vertical disparity and the adjusted horizontal disparity are determined in accordance with a magnitude of the tilt of the head-mounted device.

30. The method of item 25, wherein the overlay image data comprises text.

31. A system comprising:

one or more processors; and
one or more computer readable media comprising computer readable code executable by the one or more processors to:

obtain, by a head-mounted device, 3D scene image data comprising stereo images;
obtain overlay image data for presentation on the 3D scene image data;
present overlay image data over the stereo images at a first disparity determined based on a depth value of the 3D scene image data;
obtain orientation information of the head-mounted device; and
in accordance with a determination that an orientation of the head-mounted device satisfies a correction criterion:

determine, based on the first disparity and the orientation information, a second disparity comprising an adjusted vertical and an adjusted horizontal disparity, and
apply the adjusted vertical disparity and the adjusted horizontal disparity to the overlay image data.

32. The system of item 31, wherein a distance corresponding to the first disparity is equivalent to a distance corresponding to the second disparity.

33. The system of item 31, wherein an axis of the second disparity comports with an axis of the orientation of the head-mounted device.

34. The system of item 31, further comprising computer readable code to:

determine the orientation of the head-mounted device based on motion sensor data from the head-mounted device; and
determine that the orientation of the head-mounted device satisfies the correction criterion based on a determination that a tilt of the head-mounted device satisfies a predefined threshold based on the motion sensor data.

35. The system of item 34, wherein the adjusted vertical disparity and the adjusted horizontal disparity are determined in accordance with a magnitude of the tilt of the head-mounted device.

36. The system of item 31, wherein the overlay image data comprises text.

ITEM LIST 2:

1. A method comprising:

obtaining, by a head-mounted device, stereo frames of a scene;
determining one or more depth values for content in the stereo frames;
determining a target depth value for overlay content for the stereo frames based on the one or more depth values for the content in the stereo frames;
presenting the overlay content over the stereo frames using a first disparity determined based on the target depth value; and
in accordance with a determination that an orientation of the head-mounted device satisfies a correction criterion:

determining an adjusted target depth value for the overlay content greater than the target depth value, and
reducing a disparity of the overlay content from the first disparity in accordance with the adjusted target depth value.

2. The method of item 1, wherein the target depth value is different than the depth values for the content in the stereo frames, and the adjusted target depth value is closer to the one or more depth values for the content in the stereo frames than the target depth value.

3. The method of item 1, wherein the correction criterion comprises a threshold head tilt value.

4. The method of item 3, further comprising:

determining the orientation of the head-mounted device based on motion sensor data from the head-mounted device; and
determining that the orientation of the head-mounted device satisfies the correction criterion based on a determination that a tilt of the head-mounted device satisfies the threshold head tilt value.

5. The method of item 4, wherein the adjusted target depth value is determined in accordance with a magnitude of the tilt of the head-mounted device.

6. The method of item 4, further comprising:

determining an updated orientation of the head-mounted device based on additional motion sensor data from the head-mounted device; and in response to a determination that that the updated orientation of the head-mounted device fails to satisfy the correction criterion, adjusting the disparity of the overlay content in accordance with the target depth value.

7. The method of any of items 1-6, wherein the overlay content comprises text.

8. A non-transitory computer readable medium comprising computer readable code to perform the method of any of items 1-7.

9. A system comprising:

one or more processors; and
one or more computer readable media comprising computer readable code executable by the one or more processors to:

obtain, by a head-mounted device, stereo frames of a scene;
determine one or more depth values for content in the stereo frames;
determine a target depth value for overlay content for the stereo frames based on the one or more depth values of the content in the stereo frames;
present the overlay content over the stereo frames using a first disparity determined based on the target depth value; and
in accordance with a determination that an orientation of the head-mounted device satisfies a correction criterion:

determine an adjusted target depth value for the overlay content greater than the target depth value, and
reduce a disparity of the overlay content from the first disparity in accordance with the adjusted target depth value.

10. The system of item 9, wherein the target depth value is different than the depth values for the content in the stereo frames, and the adjusted target depth value is closer to the one or more depth values for the content in the stereo frames than the target depth value.

11. The system of item 9, wherein the correction criterion comprises a threshold head tilt value.

12. The system of item 11, further comprising computer readable code to:

determine the orientation of the head-mounted device based on motion sensor data from the head-mounted device; and
determine that the orientation of the head-mounted device satisfies the correction criterion based on a determination that a tilt of the head-mounted device satisfies the threshold head tilt value.

13. The system of item 12, wherein the adjusted target depth value is determined in accordance with a magnitude of the tilt of the head-mounted device.

14. The system of item 12, further comprising computer readable code to:

determine an updated orientation of the head-mounted device based on additional motion sensor data from the head-mounted device; and
in response to a determination that that the updated orientation of the head-mounted device fails to satisfy the correction criterion, adjust the disparity of the overlay content in accordance with the target depth value.

15. The system of any of items 9-14, wherein the overlay content comprises text.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. A method comprising:

obtaining, by a head-mounted device, stereo frames of a scene;
determining one or more depth values for content in the stereo frames;
determining a target depth value for overlay content for the stereo frames based on the one or more depth values for the content in the stereo frames;
presenting the overlay content over the stereo frames using a first disparity determined based on the target depth value; and
in accordance with a determination that an orientation of the head-mounted device satisfies a correction criterion:

determining an adjusted target depth value for the overlay content greater than the target depth value, and
reducing a disparity of the overlay content from the first disparity in accordance with the adjusted target depth value.

2. The method of claim 1, wherein the target depth value is different than the depth values for the content in the stereo frames, and the adjusted target depth value is closer to the one or more depth values for the content in the stereo frames than the target depth value.

3. The method of claim 1, wherein the correction criterion comprises a threshold head tilt value.

4. The method of claim 3, further comprising:

determining the orientation of the head-mounted device based on motion sensor data from the head-mounted device; and
determining that the orientation of the head-mounted device satisfies the correction criterion based on a determination that a tilt of the head-mounted device satisfies the threshold head tilt value.

5. The method of claim 4, wherein the adjusted target depth value is determined in accordance with a magnitude of the tilt of the head-mounted device.

6. The method of claim 4, further comprising:

determining an updated orientation of the head-mounted device based on additional motion sensor data from the head-mounted device; and
in response to a determination that that the updated orientation of the head-mounted device fails to satisfy the correction criterion, adjusting the disparity of the overlay content in accordance with the target depth value.

7. The method of any of claims 1-6, wherein the overlay content comprises text.

8. A non-transitory computer readable medium comprising computer readable code to perform the method of any of claims 1-7.

9. A system comprising:

   one or more processors; and
   one or more computer readable media comprising computer readable code executable by the one or more processors to:

   obtain, by a head-mounted device, stereo frames of a scene;
   determine one or more depth values for content in the stereo frames;
   determine a target depth value for overlay content for the stereo frames based on the one or more depth values of the content in the stereo frames;
   present the overlay content over the stereo frames using a first disparity determined based on the target depth value; and
   in accordance with a determination that an orientation of the head-mounted device satisfies a correction criterion:

   determine an adjusted target depth value for the overlay content greater than the target depth value, and
   reduce a disparity of the overlay content from the first disparity in accordance with the adjusted target depth value.

10. The system of claim 9, wherein the target depth value is different than the depth values for the content in the stereo frames, and the adjusted target depth value is closer to the one or more depth values for the content in the stereo frames than the target depth value.

11. The system of claim 9, wherein the correction criterion comprises a threshold head tilt value.

12. The system of claim 11, further comprising computer readable code to:

   determine the orientation of the head-mounted device based on motion sensor data from the head-mounted device; and
   determine that the orientation of the head-mounted device satisfies the correction criterion based on a determination that a tilt of the head-mounted device satisfies the threshold head tilt value.

13. The system of claim 12, wherein the adjusted target depth value is determined in accordance with a magnitude of the tilt of the head-mounted device.

14. The system of claim 12, further comprising computer readable code to:

   determine an updated orientation of the head-mounted device based on additional motion sensor data from the head-mounted device; and
   in response to a determination that that the updated orientation of the head-mounted device fails to satisfy the correction criterion, adjust the disparity of the overlay content in accordance with the target depth value.

15. The system of any of claims 9-14, wherein the overlay content comprises text.

**FIG. 1A**

**FIG. 1B**

**_FIG. 2_**

**FIG. 3A**

**FIG. 3B**

BEGIN

400

OBTAIN FRAME DATA
405

OBTAIN SCENE IMAGE DATA
410

OBTAIN HEAD POSE DATA
415

OBTAIN OVERLAY DATA
420

DETERMINE TARGET DEPTH FOR
SCENE IMAGE DATA
425

HEAD POSE
SATISFIES CORRECTION
CRITERION?
430

N

Y

DETERMINE DISPARITY FOR
OVERLAY DATA BASED ON
TARGET DEPTH
435

DETERMINE VERTICAL AND
HORIZONTAL DISPARITY FOR
OVERLAY BASED ON TARGET
DEPTH AND HEAD POSE
440

ADDITIONAL
FRAMES RECEIVED?
450

Y

GENERATE COMPOSITE FRAME
FROM SCENE IMAGE DATA AND
OVERLAY DATA USING DISPARITY
445

N

END

*FIG. 4*

NETWORK DEVICE(S)
500

PROCESSOR(S)
510

MEMORY
512

CONTENT
DISTRIBUTION MODULE
518

NETWORK
INTERFACE
516

STORAGE
514

VIDEO DATA
522

OVERLAY
CONTENT
524

NETWORK
502

PLAYBACK DEVICE 504

MEMORY
530

MEDIA PLAYBACK
MODULE
538

STORAGE
532

USER PROFILE
540

VIDEO DATA
542

OVERLAY DATA
544

DISPLAY
536

PROCESSOR(S)
534

SENSOR(S)
550

*FIG. 5*

**FIG. 6**

Europäisches
Patentamt

European
Patent Office

Office européen
des brevets

## EUROPEAN SEARCH REPORT

**Application Number**

EP 25 17 5962

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/396752 A1 (JANSEN DOS REIS PAULO R [US]) 7 December 2023 (2023-12-07) | 1-4, 6-12,14, 15 | INV. H04N13/156 |
| A | * the whole document * | 5,13 | ADD. |
| A | US 2023/254466 A1 (MIZUO YOSHIHIRO [JP]) 10 August 2023 (2023-08-10) * paragraphs [0024] - [0050], [0100]; figures 1-5 * | 1-15 | G06T19/00 H04N13/00 |
| A | US 2020/042081 A1 (MILLER SAMUEL A [US]) 6 February 2020 (2020-02-06) * paragraphs [0042] - [0044]; claims 10-11; figures 7-8 * | 1-15 | |

**TECHNICAL FIELDS SEARCHED (IPC)**

H04N
G06T

The present search report has been drawn up for all claims

| Place of search | Date of completion of the search | Examiner |
|---|---|---|
| The Hague | 3 October 2025 | Mao, Pauline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 5962

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2025

| Patent document cited in search report | Publication date | Patent family member(s) | Publication date |
|---|---|---|---|
| US 2023396752 A1 | 07-12-2023 | EP 4286994 A1 | 06-12-2023 |
| | | US 2023396752 A1 | 07-12-2023 |
| | | US 2024314281 A1 | 19-09-2024 |
| | | US 2025254281 A1 | 07-08-2025 |
| US 2023254466 A1 | 10-08-2023 | JP 2023115541 A | 21-08-2023 |
| | | US 2023254466 A1 | 10-08-2023 |
| US 2020042081 A1 | 06-02-2020 | CN 112740665 A | 30-04-2021 |
| | | EP 3831058 A1 | 09-06-2021 |
| | | JP 7401519 B2 | 19-12-2023 |
| | | JP 2021533465 A | 02-12-2021 |
| | | US 2020042081 A1 | 06-02-2020 |
| | | US 2021341996 A1 | 04-11-2021 |
| | | WO 2020028834 A1 | 06-02-2020 |

EPO FORM P0459

For more details about this annex : see Official Journal of the European Patent Office, No. 12/82